# EUROPÄISCHE PATENTSCHRIFT

(11) **EP 3 283 589 B1**
(45) Veröffentlichungstag und Bekanntmachung des Hinweises auf die Patenterteilung: **05.08.2020**
(21) Anmeldenummer: 16719234.3
(22) Anmeldetag: 11.04.2016
(51) Int. Cl.: C09D 175/14, C08J 7/04, C08J 7/18

(54) **VERFAHREN ZUR HERSTELLUNG VON FORMKÖRPERN MIT EINER STRAHLUNGSGEHÄRTETEN BESCHICHTUNG**
METHOD FOR PRODUCING SHAPED BODIES HAVING A RADIATION-CURED COATING
PROCÉDÉ DE FABRICATION DE CORPS FAÇONNÉS POURVUS D'UN REVÊTEMENT DURCI PAR RAYONNEMENT

(30) Priorität: 14.04.2015 EP 15163494; 26.11.2015 EP 15196508
(43) Veröffentlichungstag der Anmeldung: 21.02.2018
(73) Patentinhaber: Covestro Deutschland AG, 51373 Leverkusen (DE)
(72) Erfinder: LEONHARDT, Konstantin, 41515 Grevenbroich (DE); PETZOLDT, Joachim, 40789 Monheim (DE); KÜNZEL, Roland, 51381 Leverkusen (DE)
(74) Vertreter: Levpat
(86) Internationale Anmeldenummer: PCT/EP2016/057876
(87) Internationale Veröffentlichungsnummer: WO 2016/166042

(56) Entgegenhaltungen:
- EP-A1- 2 113 527
- WO-A1-2014/188850
- US-A1- 2011 049 392
- US-A1- 2013 052 363

## Beschreibung

Die vorliegende Erfindung betrifft ein Verfahren zur Herstellung von Formkörpern mit einer strahlungsgehärteten Beschichtung, wobei die Beschichtung ein Polyurethanpolymer umfasst, welches (Meth)acrylatgruppen aufweist und wobei die Strahlungshärtung der Beschichtung mittels LED-UV-Strahlern erfolgt. Weiterhin betrifft diese Erfindung auch die nach diesem Verfahren herstellbaren Formkörper.

Es sind Verfahren bekannt, bei denen zunächst eine Kunststofffolie mittels gängiger Lackierverfahren wie Rakeln oder Spritzen großflächig beschichtet wird und diese Beschichtung durch physikalische Trocknung oder Teilhärtung nahezu klebfrei antrocknet. Diese Folie kann dann bei erhöhten Temperaturen verformt und anschließend verklebt, hinterspritzt oder hinterschäumt werden. Dieses Konzept bietet viel Potential für die Herstellung zum Beispiel von Bauteilen durch Kunststoffverarbeiter, wobei der aufwendigere Lackierschritt dreidimensionaler Bauteile durch die einfachere Beschichtung eines flächigen Substrats ersetzt werden kann.

In aller Regel setzen gute Oberflächeneigenschaften eine hohe Vernetzungsdichte der Beschichtung voraus. Hohe Vernetzungsdichten führen aber zu duromerem Verhalten mit maximal möglichen Verstreckungsgraden von nur wenigen Prozent, so dass die Beschichtung während des Verformvorganges zur Rissbildung neigt. Dieser offensichtliche Konflikt zwischen erforderlicher hoher Vernetzungsdichte und angestrebtem hohen Verstreckungsgrad kann gelöst werden, zum Beispiel indem die Trocknung/Härtung der Beschichtung in zwei Schritten, vor und nach der Verformung, durchgeführt wird. Insbesondere geeignet für eine Nachhärtung ist eine strahlungsinduzierte Vernetzungsreaktion in der Beschichtung.

Darüber hinaus ist für eine wirtschaftliche Anwendung dieses Verfahrens das zwischenzeitliche Aufwickeln der beschichteten, verformbaren Folie auf Rollen notwendig. Die dabei in den Rollen auftretenden Druck- und Temperaturbelastungen, stellen besondere Anforderungen an die Blockfestigkeit der Beschichtung.

WO 2005/080484 A1 beschreibt eine strahlungshärtbare Verbundschichtplatte oder -folie aus mindestens einer Substratschicht und einer Deckschicht, die eine strahlungshärtbare Masse mit einer Glasübergangstemperatur unter 50 °C mit hoher Doppelbindungsdichte enthält.

WO 2005/118689 A1 offenbart eine analoge Verbundschichtplatte oder -folie, bei der die strahlungshärtbare Masse zusätzlich Säuregruppen enthält. Beide Anmeldungen beschreiben die Deckschicht als nicht klebend, eine höhere Blockfestigkeit, wie zum Beispiel für das Aufrollen der Folie um einen Kern benötigt wird, wird nicht erreicht. Die Möglichkeit, die Verbundfolien vor der Strahlungshärtung der Deckschicht zu Rollen aufzuwickeln, wird daher auch nicht erwähnt.

WO 2005/099943 A2 beschreibt einen flexiblen Schichtverbund mit einem Träger und mindestens einer auf den Träger aufgebrachten Schicht härtbaren Lackes, bei dem die Schicht härtbaren Lacks ein doppelbindungshaltiges Bindemittel mit einer Doppelbindungsdichte zwischen 3 mol/kg und 6 mol/kg, mit einer Glasübergangstemperatur Tg zwischen -15°C bis 20 °C und einem Festkörperanteil zwischen 40% und 100% aufweist, der nach thermischer Trocknung nicht klebrig ist. Die Schrift lehrt, dass die Beschichtung aufgrund der niedrigen Tg staubanfällig sein kann. Im Beispiel wird ein Trocknungsgrad/eine Blockfestigkeit der Beschichtung vor der Strahlungshärtung erreicht, bei der nach einer Belastung von 500 g/cm² für 60 s bei 10 °C noch Abprägungen eines Filterpapiers sichtbar sind. Die Belastungen auf eine Beschichtung in einer Folienrolle sind Druck und Temperatur betreffend üblicherweise höher. Die Möglichkeit, die Folien vor der Strahlungshärtung des Lacks auf Rollen aufzuwickeln, wird daher auch in dieser Schrift nicht erwähnt.

Alle zuvor zitierten Anmeldungen erwähnen zudem nicht die Verwendung von nano-skaligen Partikeln als Bestandteil der strahlungshärtbaren Beschichtung.

WO 2006/008120 A1 offenbart eine wässrige Dispersion aus nanoskaligen Polymerpartikeln aus organischen Bindemitteln, wobei in diesen Nanopartikeln als hochdisperse Phase enthalten sind, weiterhin Wasser und/oder eine wässrige kolloidale Lösung eines Metalloxids als kontinuierliche Phase sowie gegebenenfalls Zusatzstoffe und Additive. Verwendung finden derartige wässrige Zusammensetzungen als Lackzusammensetzung zu Beschichtungszwecken.

Auf die Trocknungseigenschaften dieser Systeme wird nicht eingegangen, aufgrund der niedrigen Molekulargewichte insbesondere für die Polyurethansysteme ist aber von nur geringen Blockfestigkeiten auszugehen. Die Verwendung dieser Systeme zur Beschichtung von Folien wird nicht erwähnt.

Ebenfalls finden sich in dieser Schrift keine Hinweise darauf, wie sich eine solche Dispersion verhält, wenn sie auf eine thermoplastische Folie aufgetragen wird und die Folie verformt wird. Solche Beschichtungen müssen insbesondere eine ausreichende Haftung auf dem Foliensubstrat aufweisen. Weiter von Vorteil ist, wie bereits erwähnt, eine möglichst hohe Blockfestigkeit, damit die beschichtete, aber ungehärtete Folie auf Rollen aufgewickelt werden kann. und wobei die Beschichtung weiterhin anorganische Nanopartikel mit einer mittleren Teilchengröße von ≥ 1 nm bis ≤ 200 nm umfasst. Weiterhin offenbart EP-A 2113527 ein Verfahren zur Herstellung solcher beschichteter Folien, die Verwendung solcher Folien zur Herstellung von Formkörpern, ein Verfahren zur Herstellung von Formkörpern mit einer strahlungsgehärteten Beschichtung sowie nach diesem Verfahren herstellbare Formkörper. Die Strahlungshärtung erfolgt mit herkömmlichen UV-Strahlern.

Die Härtung von Beschichtung mittels LED-Strahler ist nur in wenigen Gebieten etabliert, wie beispielsweise im Bereich der Klebstoffhärtung und im Bereich der Inkjet-Drucktechnologie.

Bei der Herstellung von Formkörpern mit beschichteten Folien erfolgt die Aushärtung der strahlenhärtbaren Beschichtung mittels UV-Strahlung. Üblich ist die UV-Härtung mittels Hg-Dampf-Lampen. Aufgrund ihres breiten Emissionsspektrums erzeugen diese Ozon und sehr viel Wärme. Weiterhin tragen sie zu einem hohen Energieverbrauch während der Herstellung der Formkörper bei. Daher wäre der Einsatz von LED-UV-Strahlern bei der Herstellung von Formkörpern mit beschichteten Folien wünschenswert, um Energie einzusparen, da mit LED-UV-Strahlern im Vergleich zu herkömmlichen UV-Strahlern kurze Schaltzeiten möglich sind. Außerdem entsteht bei der Aushärtung mittels LED-UV-Strahlern kein Ozon und es ist weiterhin eine höhere Lebensdauer der LED-UV-Strahler zu erwarten, was im Hinblick auf Arbeitssicherheit und ökologische Aspekte von Vorteil ist.

Wünschenswert wäre, dass die Beschichtung der Folien nach der Verformung und Härtung mittels LED-UV-Strahlung eine hohe Abriebbeständigkeit bei gleichzeitig guter Haftung auf der Folie zeigt.

*Die* US 2011/049392 A1*,* US 2013/0052363 A1 *und die* WO 2014/188850 A1 *offenbaren die Verwendung von LED-UV-Lampen zur Härtung von UV-härtbaren Beschichtungen. Es gibt jedoch aus diesen Dokumenten keinen Hinweis, dass die Verwendung solcher Strahler besonders vorteilhaft gerade bei der dreidimensionale Aushärtung von geformten Körpern ist und zu einer gleichmäßigen Aushärtung aller Seiten des Körpers führt; was bei Verwendung gebräuchlicher UV-Strahler, wie sie beispielsweise in der* EP-A 2113527 *verwendet werden, nicht der Fall ist.*

Die vorliegende Erfindung hat sich die Aufgabe gestellt, ein Verfahren zur Herstellung von beschichteten Formkörpern bereitzustellen, welches eine hohe Energieeffizienz aufweist, wobei die Beschichtungen der Folien nach dem Verformen und Härten eine hohe Abriebbeständigkeit bei gleichzeitig guter Haftung auf der Folie zeigen.

Die vorliegende Erfindung betrifft ein Verfahren zur Herstellung von Formkörpern mit einer strahlungsgehärteten Beschichtung, umfassend die Schritte:
- Bereitstellen einer beschichteten Folie, wobei die Folie eine strahlungshärtbare Beschichtung umfasst, wobei die Beschichtung ein Polyurethanpolymer umfasst, welches (Meth)acrylatgruppen aufweist und welches erhältlich ist aus der Reaktion einer Reaktionsmischung umfassend:
   (a) Polyisocyanate und
   (b1) (Meth)acrylatgruppen umfassende und gegenüber Isocyanaten reaktive Verbindungen,
   (b2) mindestens einen Fotoinitiator
   und wobei die Beschichtung weiterhin anorganische Nanopartikel mit einer mittleren Teilchengröße von ≥ 1 nm bis ≤ 200 nm umfasst,
- Formen des Formkörpers
- Härten der strahlungshärtbaren Beschichtung mittels LED-UV-Strahlung.
- optional nach der Härtung mittels LED-UV-Strahlung, Härtung mit UVC-Strahlung.

Die beschichtete Folie wird hierbei durch thermisches Verformen in die gewünschte Endform gebracht. Dies kann mittels Verfahren wie Tiefziehen, Vakuum-Tiefziehen, Pressen oder Blasverformen erfolgen.

Nach dem Verformungsschritt wird die Beschichtung der Folie durch Bestrahlung mit LED-UV-Strahlung endgehärtet. Optional kann sich eine weiter Härung mittels UVC-Strahlung anschließen, um die Kratzfestigkeit zu erhöhen.

Die nach diesem Verfahren hergestellten Formkörper können Strukturelemente mit sehr kleinen Krümmungsradien aufweisen.

Unter der Strahlungshärtung mittels LED-UV-Strahlern versteht man die radikalische Polymerisation von ethylenisch ungesättigten Kohlenstoff-Kohlenstoff-Doppelbindungen mittels Initiatorradikalen, die durch Bestrahlung mit LED-UV-Strahlung beispielsweise aus den Fotoinitiatoren freigesetzt werden.

Die Strahlungshärtung erfolgt bevorzugt durch Einwirkung LED-UV-Strahlung mit einem quasimonochromatischen Emmissionsspektrum mit definierten Wellenlängen im Bereich von ≥ 360 nm bis ≤ 410 nm, vorzugsweise bei definierten Wellenlängen im Bereich von 365 nm, 375 nm, 385nm, 395 nm und/oder 405 nm. Das Emissionsspektrum weist keine kurzen Wellenlängen auf, wie sie für das Spektrum der UV-Hg-Strahlern typisch sind. Die LED-Strahler beruhen auf einer Halbleitertechnologie. Durch Bestromung werden direkt die spezifische Wellenlängen emittiert.

UVC-Strahler, die optional zusätzlich zur Härtung mittels LED-Strahlern eingesetzt werden können, emitieren im Wellenlängenbereich von 200 bis 280 nm. Üblicherweise nutzt man hierfür UV-Hg-Mitteldruckstrahler. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind zum Beispiel Kunststofffolien, Glas oder Flüssigkeiten wie Wasser.

Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, eine Wärmelampe vor oder während der Bestrahlung mittels LED-Strahlern einzusetzen, um die für die Vernetzung erforderliche Temperaturen zu erzielen.

Die resultierende gehärtete, beschichtete, verformte Folie zeigt sehr gute Beständigkeit gegenüber Lösungsmittel, färbenden Flüssigkeiten wie sie im Haushalt vorkommen sowie hohe Härte, gute Kratz- und Abriebbeständigkeit bei hoher optischer Transparenz. Diese kann insbesondere erhöht werden durch zusätzliche Härtung mittels UVC-Strahlung.

In einer Ausführungsform erfolgt das Formen des Formkörpers in einem Werkzeug bei einem Druck von ≥ 20 bar bis ≤ 150 bar. Vorzugsweise liegt der Druck bei diesem Hochdruckverformverfahren in einem Bereich von ≥ 50 bar bis ≤ 120 bar oder in einem Bereich von ≥ 90 bar bis ≤ 110 bar. Der anzuwendende Druck wird insbesondere von der Dicke der zu verformenden Folie und der Temperatur sowie dem verwendeten Folienmaterial bestimmt.

In einer weiteren Ausführungsform findet das Formen des Formkörpers bei einer Temperatur von ≥ 20 °C bis ≤ 60 °C unterhalb der Erweichungstemperatur des Materials der Folie statt.

Vorzugsweise liegt diese Temperatur um ≥ 30 °C bis ≤ 50 °C oder um ≥ 40 °C bis ≤ 45 °C unterhalb der Erweichungstemperatur. Dieses einer Kaltverformung vergleichbare Vorgehen hat den Vorteil, dass dünnere Folien, die zu exakterer Ausformung führen, verwendet werden können. Ein weiterer Vorteil sind kürzere Taktzeiten sowie eine geringere thermische Belastung der Beschichtung. Solche Verformungstemperaturen werden vorteilhafterweise in Kombination mit einem Hochdruckverformverfahren eingesetzt.

In einer weiteren Ausführungsform umfasst das Verfahren weiterhin den Schritt:
- Auftragen eines Polymers auf die der ausgehärteten Schicht entgegengesetzten Seite der Folie.

Die verformte beschichtete Folie kann vor oder bevorzugt nach der Endhärtung durch Verfahren wie zum Beispiel Hinterspritzen oder auch Hinterschäumen mit gegebenenfalls gefüllten Polymeren wie Thermoplasten oder auch reaktiven Polymeren wie Zweikomponenten-Polyurethansystemen modifiziert werden. Dabei kann wahlweise auch eine Klebschicht als Haftvermittler eingesetzt werden. Es entstehen Formkörper, die dort, wo ihre Oberfläche durch die gehärtete Beschichtung auf der Folie gebildet wird, über hervorragende Gebrauchseigenschaften verfügen.

Gegenstand der Erfindung ist weiterhin ein Formkörper, herstellbar durch ein Verfahren gemäß der vorliegenden Erfindung. Solche Formkörper können zum Beispiel Fahrzeuganbauteile, Kunststoffteile wie Blenden für den Fahrzeug(innen)bau und/oder Flugzeug(innen)bau, Möbelbau, elektronische Geräte, Kommunikationsgeräte, Gehäusen oder dekorativen Gegenstände sein.

Die erfindungsgemäß einzusetzende Folie besitzt vorteilhafterweise neben der geforderten allgemeinen Beständigkeit vor allem die nötige thermische Verformbarkeit. Prinzipiell geeignet sind daher insbesondere thermoplastische Polymere wie ABS, AMMA, ASA, CA, CAB, EP, UF, CF, MF, MPF, PF, PAN, PA, PE, HDPE, LDPE, LLDPE, PC, PET, PMMA, PP, PS, SB, PUR, PVC, RF, SAN, PBT, PPE, POM, PP-EPDM, und UP (Kurzbezeichnungen nach DIN 7728T1) sowie ihre Mischungen, weiterhin Verbundfolien aufgebaut aus zwei oder mehr Schichten dieser Kunststoffe. Allgemein können die erfindungsgemäß einzusetzenden Folien auch verstärkende Fasern oder Gewebe enthalten, sofern diese die erwünschte thermoplastische Verformung nicht beeinträchtigen.

Besonders geeignet sind thermoplastische Polyurethane, Polymethylmethacrylat (PMMA) sowie modifizierte Varianten von PMMA, weiterhin Polycarbonat (PC), ASA, PET, PP, PP-EPDM und ABS.

Die Folie oder auch Platte wird bevorzugt in einer Dicke von ≥ 10 µm bis ≤ 1500 µm, mehr bevorzugt von ≥ 50 µm bis ≤ 1000 µm und besonders bevorzugt von ≥ 200 µm bis ≤ 400 µm verwendet. Zusätzlich kann das Material der Folie Additive und/oder Prozesshilfsmittel zur Folienherstellung enthalten, wie zum Beispiel Stabilisatoren, Lichtschutzmittel, Weichmacher, Füllstoffe wie Fasern und Farbstoffe enthalten. Die zur Beschichtung vorgesehene sowie die andere Seite der Folie kann glatt sein oder eine Oberflächenstruktur aufweisen, wobei eine glatte Oberfläche der zu beschichtenden Seite bevorzugt ist.

In einer Ausführungsform ist die Folie eine Polycarbonatfolie mit einer Dicke von ≥ 10 µm bis ≤ 1500 µm. Hierunter ist ebenfalls eine Polycarbonatfolie mit den vorgenannten Additiven und/oder Prozesshilfsmitteln eingeschlossen. Die Dicke der Folie kann auch ≥ 50 µm bis ≤ 1000 µm oder ≥ 200 µm bis ≤ 400 µm betragen.

Die Folie kann ein- oder beidseitig beschichtet sein, wobei das einseitige Beschichten bevorzugt wird. Im Falle einseitiger Beschichtung kann auf der Rückseite der Folie, also auf der Oberfläche, auf der das Beschichtungsmittel nicht aufgebracht wird, optional eine thermisch verformbare Klebstoffschicht aufgebracht sein. Hierzu eignen sich je nach Vorgehensweise bevorzugt Schmelzklebstoffe oder strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein sollten.

Optional kann die Folie vor oder nach dem Auftragen der strahlungshärtbaren Schicht mit einer oder mehreren Schichten lackiert oder bedruckt werden. Dieses kann auf der beschichteten oder auf der unbeschichteten Seite der Folie erfolgen. Die Schichten können farb- oder funktionsgebend sein, vollflächig oder nur teilweise, zum Beispiel als Druckbild, aufgetragen werden. Die verwendeten Lacke sollten thermoplastisch sein, um bei einer später erfolgenden Verformung nicht zu reißen. Druckfarben, wie sie für so genannte "In-Mould-Decoration"-Verfahren kommerziell erhältlich sind, können eingesetzt werden.

Die strahlungshärtbare Beschichtung der Folie kann später die Oberfläche von Gebrauchsgegenständen darstellen. Erfindungsgemäß ist vorgesehen, dass sie ein Polyurethanpolymer umfasst. Dieses Polyurethanpolymer kann auch weitere polymere Einheiten umfassen, beispielsweise Polyharnstoff-Einheiten, Polyester-Einheiten, und dergleichen mehr. Das Polyurethanpolymer weist (Meth)acrylatgruppen auf. Der Begriff (Meth)acrylatgruppen ist im Sinne der vorliegenden Erfindung als Acrylatgruppen und/oder Methacrylatgruppen umfassend zu verstehen. Die (Meth)acrylatgruppen können grundsätzlich an beliebiger Stelle des Polyurethanpolymers oder der weiteren Einheiten an das Polymer angebunden sein. Beispielsweise können sie Teil einer Polyether- oder Polyester(meth)acrylat-Polymereinheit sein.

Das (Meth)acrylatgruppen aufweisende Polyurethan kann als pulverförmiger Feststoff, als Schmelze, aus Lösung oder bevorzugt als wässrige Dispersion vorliegen und eingesetzt werden. Wässrige Dispersionen bieten den Vorteil, auch besonders hochmolekulare Polyurethane in einem Beschichtungsmittel mit niedriger dynamischer Viskosität zu verarbeiten, da bei Dispersionen die Viskosität vom Molekulargewicht der Bestandteile der dispersen Phase unabhängig sind.

Geeignete Dispersionen sind beispielsweise (Meth)acrylatgruppen aufweisende Polyurethandispersionen alleine oder in Mischung mit (Meth)acrylatgruppen aufweisenden Polyacrylatdispersionen und/oder (Meth)acrylatgruppen aufweisenden niedermolekularen Verbindungen und/oder dispergierten Polymeren ohne Acrylat- oder Methacrylatgruppen.

Erfindungsgemäß ist vorgesehen, dass das (Meth)acrylatgruppen aufweisende Polyurethanpolymer erhältlich ist aus der Reaktion einer Reaktionsmischung umfassend:
(a) Polyisocyanate und
(b1) (Meth)acrylatgruppen umfassende und gegenüber Isocyanaten reaktive Verbindungen
(b2) mindestens einen Fotoinitiator

Geeignete Polyisocyanate (a), worunter auch Diisocyanate zu verstehen sind, sind aromatische, araliphatische, aliphatische oder cycloaliphatische Polyisocyanate. Es können auch Mischungen solcher Di- oder Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, die isomeren Xylendiisocyanate, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Oxadiazintrion,- Uretdion-, Iminooxadiazindionstruktur und Mischungen derselben. Bevorzugt sind Di- oder Polyisocyanate mit cycloaliphatischer oder aromatischer Struktur, da ein hoher Anteil an diesen Strukturelementen, die Trocknungseigenschaften insbesondere die Blockfestigkeit der Beschichtung vor der UV-Härtung positiv beeinflusst. Besonders bevorzugt Diisocyanate sind Isophorondiisocyanat und die isomeren Bis(4,4'-isocyanatocyclohexyl)methane sowie deren Mischungen.

Die Komponente (b1) umfasst vorzugsweise hydroxyfunktionelle Acrylate oder Methacrylate. Beispiele sind 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie Pemcure® 12A (Cognis, Düsseldorf, DE), 2-Hydroxypropyl-(meth)acrylat, 4-Hydroxybutyl(meth)acrylat, 3-Hydroxy-2,2-dimethylpropyl(meth)acrylat, die Acrylsäure- und/oder Methacrylsäureteilester mehrwertiger Alkohole wie Trimethylolpropan, Glycerin, Pentaerythrit, Dipentaerythrit, Sorbit, ethoxiliertes, propoxiliertes oder alkoxyliertes Trimethylolpropan, Glycerin, Pentaerythrit, Dipentaerythrit oder deren technische Gemische. Bevorzugt sind die acrylierten Monoalkohole. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum Beispiel die Umsetzungsprodukte von (Meth)acrylsäure mit Glycidyl(meth)acrylat oder dem Glycidylester der Versaticsäure.

Weiterhin können Isocyanat-reaktive oligomere oder polymere ungesättigte (Meth)acrylatgruppen enthaltende Verbindungen alleine oder in Kombination mit den vorgenannten monomeren Verbindungen eingesetzt werden. Bevorzugt werden als Komponente (b1) hydroxylgruppenhaltige Polyesteracrylate mit einem OH-Gehalt von ≥ 30 mg KOH/g bis ≤ 300 mg KOH/g, bevorzugt ≥ 60 mg KOH/g bis ≤ 200 mg KOH/g, besonders bevorzugt ≥ 70 mg KOH/g bis ≤ 120 mg KOH/g eingesetzt. Bei der Herstellung der hydroxyfunktionellen Polyesteracrylate können insgesamt 7 Gruppen von Monomerbestandteilen zur Anwendung kommen:
1. (Cyclo)Alkandiole wie zweiwertige Alkohole mit (cyclo)aliphatisch gebundenen Hydroxylgruppen des Molekulargewichtsbereichs von ≥ 62 g/mol bis ≤ 286 g/mol, zum Beispiel Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie zum Beispiel Diethylenglykol, Triethylenglykol, Tetraethylenglykol, Dipropylenglykol, Tripropylenglykol, Polyethylen-, Polypropylen- oder Polybutylenglykole mit einem Molekulargewicht von ≥ 200 g/mol bis ≤ 4000 g/mol, bevorzugt ≥ 300 g/mol bis ≤ 2000 g/mol, besonders bevorzugt ≥ 450 g/mol bis ≤ 1200 g/mol. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs von ≥ 92 g/mol bis ≤ 254 g/mol, wie zum Beispiel Glycerin, Trimethylolpropan, Pentaerythrit, Dipentaerythrit und Sorbit oder auf diesen Alkoholen gestartete Polyether wie zum Beispiel das Umsetzungsprodukt von 1 mol Trimethylolpropan mit 4 mol Ethylenoxid.
3. Monoalkohole wie zum Beispiel Ethanol, 1- und 2-Propanol, 1- und 2-Butanol, 1-Hexanol, 2-Ethylhexanol, Cyclohexanol und Benzylalkohol.
4. Dicarbonsäuren des Molekulargewichtsbereichs ≥ 104 g/mol bis ≤ 600 g/mol und/oder deren Anhydride, wie zum Beispiel Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren oder deren Anhydride wie zum Beispiel Trimellithsäure und Trimellithsäureanhydrid.
6. Monocarbonsäuren, wie zum Beispiel Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure oder dimere Acrylsäure.

Geeignete hydroxylgruppenhaltige Polyesteracrylate umfassen das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Gegebenenfalls können in diese Polyesteracrylate auch dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-mono-methylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol, Butandiol und/oder Trimethylolpropan oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen ≥ 0 mg KOH/g und ≤ 20 mg KOH/g, bevorzugt zwischen ≥ 0,5 mg KOH/g und ≤ 10 mg KOH/g und besonders bevorzugt zwischen ≥ 1 mg KOH/g und ≤ 3 mg KOH/g. Die Reaktion wird bevorzugt durch Katalysatoren wie Triphenylphosphin, Thiodiglykol, Ammonium- und/oder Phosphoniumhalogeniden und/oder Zirkon- oder Zinnverbindungen wie Zinn(II)ethylhexanoat katalysiert.

Ebenfalls bevorzugt als Komponente (b1) sind hydroxylgruppenhaltige Epoxy(meth)acrylate mit OH-Gehalten von ≥ 20 mg KOH/g bis ≤ 300 mg KOH/g, bevorzugt von ≥ 100 mg KOH/g bis ≤ 280 mg KOH/g, besonders bevorzugt von ≥ 150 mg KOH/g bis ≤ 250 mg KOH/g oder hydroxylgruppenhaltige Polyurethan(meth)acrylate mit OH-Gehalten von ≥ 20 mg KOH/g bis ≤ 300 mg KOH/g, bevorzugt von ≥ 40 mg KOH/g bis ≤ 150 mg KOH/g, besonders bevorzugt von ≥ 50 mg KOH/g bis ≤ 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Für die in der Beschichtung vorliegenden anorganischen Nanopartikel kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel sind solche aus Siliziumoxid, Aluminiumoxid, Ceroxid, Zirkonoxid, Nioboxid und Titanoxid, besonders bevorzugt sind hierbei Siliziumoxid-Nanopartikel.

Die eingesetzten Partikel weisen mittlere Teilchengrößen von ≥ 1 nm bis ≤ 200 nm, bevorzugt von ≥ 3 nm bis ≤ 50 nm, besonders bevorzugt von ≥ 5 nm bis ≤ 7 nm auf. Die mittlere Teilchengröße kann vorzugsweise als Z-Mittelwert mittels dynamischer Lichtstreuung in Dispersion bestimmt werden. Unterhalb von 1 nm Partikelgröße erreichen die Nanopartikel die Größe der Polymerpartikel. Solch kleine Nanopartikel können dann zu einem Viskositätsanstieg der Beschichtung führen, welches nachteilig ist. Oberhalb von 200 nm Partikelgröße können die Partikel teilweise mit bloßem Auge wahrgenommen werden, was nicht erwünscht ist.

Bevorzugt weisen ≥ 75 %, besonders bevorzugt ≥ 90 %, ganz besonders bevorzugt ≥ 95 % aller eingesetzten Partikel die vorstehend definierten Größen auf. Mit zunehmendem Grobanteil in der Partikelgesamtheit werden die optischen Eigenschaften der Beschichtung schlechter, insbesondere kann eine Trübung auftreten.

Das Partikel können so ausgewählt werden, dass der Brechungsindex ihres Materials dem Brechungsindex der ausgehärteten strahlungshärtbaren Beschichtung entspricht. Dann weist die Beschichtung transparente optische Eigenschaften auf. Vorteilhaft ist beispielsweise ein Brechungsindex im Bereich von ≥ 1,35 bis ≤ 1,45.

Die nichtflüchtigen Anteile der strahlungshärtbaren Schicht können beispielsweise die nachfolgenden Mengenanteile ausmachen. Die Nanopartikel können in Mengen von ≥ 1 Gewichts-% bis ≤ 60 Gewichts-%, bevorzugt ≥ 5 Gewichts-% bis ≤ 50 Gewichts-% und insbesondere von ≥ 10 Gewichts-% bis ≤ 40 Gewichts-% zugegen sein. Es können weitere Verbindungen wie zum Beispiel monomere Vernetzer in einem Anteil von ≥ 0 Gewichts-% bis ≤ 40 Gewichts-% und insbesondere von ≥ 15 Gewichts-% bis ≤ 20 Gewichts-% vorhanden sein. Das Polyurethanpolymer kann dann die Differenz zu 100 Gewichts-% ausmachen. Generell gilt die Vorgabe, dass die Summe der einzelnen Gewichtsanteile ≤ 100 Gewichts-% beträgt.

Als die vorstehend erwähnten (Meth)acrylatgruppen aufweisenden Polyacrylatdispersionen kommen sogenannte Sekundärdispersionen oder Emulsionspolymerisate, die co-emulgierte (Meth)acrylatgruppen aufweisende niedermolekulare Verbindungen enthalten, in Frage. Sekundärdispersionen werden durch radikalische Polymerisation von vinylischen Monomeren wie zum Beispiel Styrol, Acrylsäure, (Meth)acrylsäureestern und dergleichen in einem im Sinne der Polymerisation inerten Lösungsmittel hergestellt und durch interne und/oder externe Emulgatoren hydrophiliert anschließend in Wasser dispergiert. Ein Einbau von (Meth)acrylatgruppen ist möglich, indem Monomere wie Acrylsäure oder Glycidylmethacrylat bei der Polymerisation verwendet werden und diese vor dem Dispergieren in einer Modifizierungsreaktion mit den im Sinne einer Epoxid-Säure-Reaktion komplementären Verbindungen, die (Meth)acrylatgruppen enthalten wie zum Beispiel Acrylsäure oder Glycidylmethacrylat umgesetzt werden.

Emulsionspolymerisate, die co-emulgierte (Meth)acrylatgruppen aufweisende niedermolekulare Verbindungen enthalten, sind kommerziell erhältlich, beispielsweise Lux® 515, 805, 822 von Alberdingk&Boley, Krefeld, DE oder Craymul® 2716, 2717 von Cray Valley, FR.

Bevorzugt sind Polyacrylatdispersionen mit hoher Glasübergangstemperatur, die die Trocknungseigenschaften der Beschichtung vor der UV-Härtung positiv beeinflussen. Ein hoher Anteil an co-emulgierten (Meth)acrylatgruppen aufweisenden niedermolekularen Verbindungen kann sich negativ auf die Trocknungseigenschaften auswirken.

Als die vorstehend erwähnten dispergierten Polymeren ohne Acrylat- oder Methacrylatgruppen kommen beispielsweise Emulsionspolymerisate in Frage, wie sie kommerziell unter der Bezeichnung Joncryl® (BASF AG, Ludwigshafen, DE), Neocryl (DSM Neoresins, Walwijk, NL) oder Primal (Rohm&Haas Deutschland, Frankfurt, DE) erhältlich sind.

In einer weiteren Ausführungsform der vorliegenden Erfindung liegt das Gewichtsmittel Mw des Polyurethanpolymers in einem Bereich von ≥ 250000 g/mol bis ≤ 350000 g/mol. Das Molekulargewicht kann mittels Gelpermeationschromatographie (GPC) bestimmt werden. Das Gewichtsmittel Mw kann auch in einem Bereich von ≥ 280000 g/mol bis ≤ 320000 g/mol oder von ≥ 300000 g/mol bis ≤ 310000 g/mol liegen. Polyurethandispersionen mit solchen Molekulargewichten der Polymere können ein günstiges Antrocknungsverhalten nach dem Auftragen und weiterhin eine gute Blockfestigkeit nach der Trocknung aufweisen.

Die Glasübergangstemperatur, insbesondere nach "Differential Scanning Calorimetry" (DSC) gemessen, ist häufig wenig geeignet, um die Bestandteile der strahlungshärtbaren Schicht zu charakterisieren. Häufig werden aufgrund der Uneinheitlichkeit der polymeren und oligomeren Bestandteile, dem Vorhandensein einheitlicherer Bausteine wie zum Beispiel von Polyesterdiolen mit mittleren Molgewichten von 2000 und den Verzweigungsgraden der Polymere wenig aussagekräftige Messwerte für die Glasübergangstemperatur erhalten. Insbesondere lässt sich eine Glasübergangstemperatur eines Bindemittels welches aus einem organischen Polyurethanpolymeren und anorganischen Nanopartikeln ("anorganischen Polymeren") besteht kaum sinnvoll definieren. Es gilt jedoch, dass eine Erhöhung an Bestandteilen aromatischer oder cycloaliphatischer Natur im Polyurethan die Antrocknung des Beschichtungsmittels positiv beeinflusst. Natürlich sollte eine Verfilmung des Beschichtungsmittels eventuell auch unter Zusatz von ≥ 3 Gewichts-% bis ≤ 15 Gewichts-% höher als Wasser siedender Lösungsmittel weiterhin gegeben sein.

Fotoinitiatioren (b2) sind durch UV-LED-Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind zum Beispiel aromatische Ketonverbindungen, zum Beispiel Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide zum Beispiel 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone, α-Hydroxyalkylphenone und oligomere α-Hydroxyalkylphenone. Es kann vorteilhaft sein auch Gemische dieser Verbindungen einzusetzen. Geeignete Initiatoren sind kommerziell erhältlich beispielsweise unter der Bezeichnung Irgacure® und Darocur® (Ciba, Basel, CH) sowie Esacure® (Fratelli Lamberti, Adelate, IT).

Vorzugsweise werden als Fotoinitiatioren im erfindungsgemäßen Verfahren Fotoinitiatoren aus der Gruppe von, Acylphosphinoxide zum Beispiel 2,4,6-Trimethyl-benzoyl-diphenylphosphinoxid, Bisacylphosphinoxide zum Beispiel Bis(2,4,6-trimethylbenzoyl)-phenylphosphinoxid, α-Hydroxyalkylphenone, oligomere α-Hydroxyalkylphenone zum Beispiel Oligo-[2-Hydroxy-2-methyl-1-((4-(1-methylvinyl)phenyl)propanone] und/oder deren Mischungen.

Besonders bevorzugt werden als Fotoinitiatoren im erfindungsgemäßen Verfahren Fotoinitiatoren aus der Gruppe der α-Hydroxyalkylphenone, oligomere α-Hydroxyalkylphenone, wie z.B. Oligo-[2-Hydroxy-2-methyl-1-((4-(1-methylvinyl)phenyl) propanone] und/oder deren Mischungen eingesetzt.

In einer weiteren Ausführungsform der vorliegenden Erfindung umfasst die Reaktionsmischung zur Herstellung des (Meth)acrylatgruppen aufweisenden Polyurethanpolymer weiterhin die folgenden Komponenten:
(b3) hydrophilierend wirkende Verbindungen mit ionischen und/oder in ionische Gruppen
überführbare Gruppen und/oder nichtionischen Gruppen
(b4) Polyolverbindungen mit einem mittleren Molekulargewicht von ≥ 50 g/mol bis ≤ 500 g/mol und einer Hydroxylfunktionalität von ≥ 2 und
(b5) aminofunktionelle Verbindungen.

Die Komponente (b3) umfasst ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (b3) sind zum Beispiel Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, N-Cyclohexylaminopropiosulfonsäure, Lysin, 3,5-Diaminobenzoesäure, Additionsprodukte von IPDI und Acrylsäure und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von ≥ 30 Gew.-% bis ≤ 100 Gew.-% an Bausteinen, die vom Ethylenoxid abgeleitet sind. In Frage kommen linear aufgebaute Polyether einer Funktionalität zwischen ≥ 1 und ≤ 3, aber auch Verbindungen der allgemeinen Formel (I), 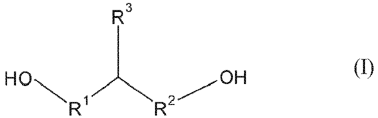 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu ≥ 30 mol-%, bevorzugt zu ≥ 40 mol-% Ethylenoxideinheiten umfassen. Bevorzugte nichtionische Verbindungen sind monofunktionelle gemischte Polyalkylenoxidpolyether, die ≥ 40 mol-% Ethylenoxid- und ≤ 60 mol-% Propylenoxideinheiten aufweisen.

Die Komponente (b3) umfasst bevorzugt ionische Hydrophilierungsmitteln, da nicht ionische Hydrophilierungsmittel sich eher negativ auf die Trocknungseigenschaften und insbesondere die Blockfestigkeit der Beschichtung vor der UV-Härtung auswirken können.

Geeignete niedermolekulare Polyole (b4) sind kurzkettige, vorzugsweise ≥ 2 bis ≤ 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die Komponente (b5) kann ausgewählt sein aus der Gruppe der Polyamine (worunter auch Diamine zu verstehen sind), die zum Erhöhen der Molmasse eingesetzt werden und bevorzugt gegen Ende der Polyadditionsreaktion zugegeben werden. Bevorzugt findet diese Reaktion im wässrigen Medium statt. Dann sollten die Polyamine reaktiver als Wasser gegenüber den Isocyanatgruppen der Komponente (a) sein. Exemplarisch seien genannt Ethylendiamin, 1,3-Propylendiamin, 1,6-Hexamethylendiamin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin®, D-Reihe (Fa. Huntsman Corp. Europe, Belgien) erhältlich sind, Diethylentriamin, Triethylentetramin und Hydrazin. Bevorzugt sind Isophorondiamin, Ethylendiamin, 1,6-Hexamethylendiamin. Besonders bevorzugt ist Ethylendiamin.

Anteilig können auch Monoamine, wie zum Beispiel Butylamin, Ethylamin und Amine der Jeffamin® M-Reihe (Huntsman Corp. Europe, Belgien), aminofunktionelle Polyethylenoxide und Polypropylenoxide zugesetzt werden.

In einer weiteren Ausführungsform umfasst die Reaktionsmischung zur Herstellung des (Meth)acrylatgruppen aufweisenden Polyurethanpolymers weiterhin die folgende Komponente:
(b6) Polyolverbindungen mit einem mittleren Molekulargewicht von ≥ 500 g/mol bis ≤ 13000 g/mol und einer mittleren Hydroxylfunktionalität von ≥ 1,5 bis ≤ 5.

Geeignete höhermolekulare Polyole (b6) sind Polyole (worunter auch Diole zu verstehen sind) mit einem zahlenmittleren Molekulargewicht im Bereich von ≥ 500 g/mol bis ≤ 13000 g/mol, bevorzugt ≥ 700 g/mol bis ≤ 4000 g/mol. Bevorzugt werden Polymere mit einer mittleren Hydroxylfunktionalität von ≥ 1,5 bis ≤ 2,5, bevorzugt von ≥ 1,8 bis ≤ 2,2, besonders bevorzugt von ≥ 1,9 bis ≤ 2,1. Dazu zählen zum Beispiel Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind zum Beispiel Umsetzungsprodukte von Adipinsäure mit Hexandiol, Butandiol oder Neopentylglykol oder Mischungen der genannten Diole des Molekulargewichts von ≥ 500 g/mol bis ≤ 4000 g/mol, besonders bevorzugt ≥ 800 g/mol bis ≤ 2500 g/mol. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole eines mittleren Molekulargewichts von ≥ 500 g/mol bis ≤ 13000 g/mol, weiterhin Polytetrahydrofurane eines mittleren Molekulargewichts von ≥ 500 g/mol bis ≤ 8000 g/mol, bevorzugt von ≥ 800 g/mol bis ≤ 3000 g/mol.

Ebenfalls geeignet sind hydroxyl-terminierte Polycarbonate, die durch Umsetzung von Diolen oder auch Lacton-modifizierten Diolen oder auch Bisphenolen, wie zum Beispiel Bisphenol A, mit Phosgen oder Kohlensäurediestern wie Diphenylcarbonat oder Dimethylcarbonat zugänglich sind. Beispielhaft seine genannt die polymeren Carbonate des 1,6-Hexandiols eines mittleren Molekulargewichts von ≥ 500 g/mol bis ≤ 8000 g/mol, sowie die Carbonate von Umsetzungsprodukten des 1,6-Hexandiols mit ε-Caprolacton im molaren Verhältnis von ≥ 0,1 bis ≤ 1. Bevorzugt sind vorgenannte Polycarbonatdiole eines mittleren Molekulargewichts von ≥ 800 g/mol bis ≤ 3000 g/mol auf Basis 1,6-Hexandiol und/oder Carbonate von Umsetzungsprodukten des 1,6-Hexandiols mit ε-Caprolacton im molaren Verhältnis von ≥ 0,33 bis ≤ 1. Hydroxyl-terminierte Polyamidalkohole und Hydroxyl-terminierte Polyacrylatdiole sind ebenfalls einsetzbar.

In einer weiteren Ausführungsform weist in der Reaktionsmischung die Anzahl der Hydroxylgruppen in der Komponente (b4) einen Anteil an der Gesamtmenge der Hydroxylgruppen und Aminogruppen von ≥ 5 mol-% bis ≤ 25 mol-% auf, wobei die Hydroxylgruppen von Wasser in der Reaktionsmischung hierbei nicht berücksichtigt werden. Dieser Anteil kann auch in einem Bereich von ≥ 10 mol-% bis ≤ 20 mol-% oder von ≥ 14 mol-% bis ≤ 18 mol-% liegen. Hierunter ist zu verstehen, dass die Anzahl der OH-Gruppen in der Komponente (b4) in der Gesamtheit der OH- und NH₂-Gruppen tragenden Verbindungen, also in der Gesamtheit der Komponenten (b1), (b3), (b4) und (b5) sowie, falls (b6) auch anwesend ist, in der Gesamtheit der Komponenten (b1), (b3), (b4), (b5) und (b6) in den genannten Bereichen liegt. Bei der Berechung wird Wasser nicht berücksichtigt. Durch den Anteil der Komponente (b4) kann der Verzweigungsgrad des Polymers beeinflusst werden, wobei ein höherer Verzweigungsgrad vorteilhaft ist. Hierdurch kann das Antrocknungsverhalten der Beschichtung verbessert werden.

Im Übrigen wird die Antrocknung durch möglichst viele und starke Wasserstoffgruppenbindungen zwischen den Molekülen der Beschichtung verbessert. Urethan, Harnstoff, Ester insbesondere Carbonatester sind Beispiele für Struktureinheiten, die die Antrocknung unterstützen, in je größerer Zahl sie eingebaut werden.

In einer weiteren Ausführungsform umfasst die Reaktionsmischung zur Herstellung des (Meth)acrylatgruppen aufweisenden Polyurethanpolymers weiterhin die folgende Komponente:
(b7) (Meth)acrylatgruppen umfassende und gegenüber Isocyanaten nicht reaktive und/oder nicht zur Reaktion gebrachte Verbindungen.

Diese Verbindungen dienen zur Erhöhung der Doppelbindungsdichte der Beschichtung. Eine hohe Doppelbindungsdichte erhöht die Gebrauchseigenschaften (Beständigkeit gegen mechanische oder chemische Einflüsse) der gehärteten Beschichtung. Sie haben allerdings einen Einfluss auf die Trocknungseigenschaften. Daher ist werden von ihnen bevorzugt ≥ 1 Gewichts-% bis ≤ 35 Gewichts-%, insbesondere ≥ 5 Gewichts-% bis ≤ 25 Gewichts-% und ganz besonders bevorzugt ≥ 10 Gewichts-% bis ≤ 20 Gewichts-% des Gesamtfestkörpers des Beschichtungsmittels eingesetzt. Diese Verbindungen werden in der Technik UV-härtender Beschichtungsmittel auch als Reaktivverdünner bezeichnet.

In einer weiteren Ausführungsform ist die Oberfläche der Nanopartikel in der Beschichtung durch die kovalente und/oder nicht kovalente Anbindung von weiteren Verbindungen modifiziert.

Eine bevorzugte kovalente Oberflächenmodifizierung ist die Silanisierung mit Alkoxysilanen und/oder Chlorsilanen. Besonders bevorzugt ist die partielle Modifizierung mit γ-Glycidoxypropyltrimethoxysilan.

Ein Beispiel für den nicht kovalenten Fall ist eine adsorptiv/assoziative Modifikation durch Tenside oder Blockcopolymere.

Weiterhin ist es möglich, dass die Verbindungen, welche an die Oberfläche der Nanopartikel kovalent und/oder nicht kovalent gebunden sind, auch Kohlenstoff-Kohlenstoff-Doppelbindungen enthalten. Bevorzugt sind hierbei (Meth)acrylatgruppen. Auf diese Weise können die Nanopartikel bei der Strahlenhärtung noch fester in die Bindemittelmatrix eingebunden werden.

Dem Beschichtungsmittel, welches zur strahlungshärtbaren Schicht getrocknet wird, können weiterhin so genannte Vernetzter zugesetzt werden, die die Antrocknung und gegebenenfalls die Haftung der strahlungshärtbaren Schicht verbessern sollen. Es kommen bevorzugt Polyisocyanate, Polyaziridine sowie Polycarbodiimide in Frage. Besonders bevorzugt sind hydrophilierte Polyisocyanate für wässrige Beschichtungsmittel. Die Menge und die Funktionalität der Vernetzer ist insbesondere im Hinblick auf die gewünschte Verformbarkeit der Folie abzustimmen. Im allgemeinen werden ≤ 10 Gewichts-% an festem Vernetzer auf den Festgehalt des Beschichtungsmittels zugesetzt. Viele der möglichen Vernetzer reduzieren die Lagerfähigkeit des Beschichtungsmittels, da sie bereits im Beschichtungsmittel langsam reagieren. Der Zusatz der Vernetzer sollte daher entsprechend kurz vor der Applikation erfolgen. Hydrophilierte Polyisocyanate sind erhältlich beispielsweise unter der Bezeichnung Bayhydur® (Bayer MaterialScience AG, Leverkusen, DE) und Rhodocoat® (Rhodia, F). Bei Zusatz eines Vernetzers kann sich die notwendige Zeit sowie die notwendige Temperatur, bis optimale Antrocknung erreicht ist, erhöhen.

Weiterhin können in der strahlungshärtbaren Schicht bzw. in dem Beschichtungsmittel, mit deren Hilfe die Schicht erzeugt wird, die in der Technologie der Lacke, Farben, Druckfarben üblichen Zusätze und/oder Hilfs- und/oder Lösemittel enthalten sein. Beispiele hierfür werden nachfolgend beschrieben.

Insbesondere sind dies Stabilisatoren, Lichtschutzmittel wie UV-Absorber und sterisch gehinderte Amine (HALS), weiterhin Antioxidantien sowie Lackhilfsmittel, zum Beispiel Antiabsetzmittel, Entschäumungs- und/oder Netzmittel, Verlaufmittel, Weichmacher, Antistatika, Katalysatoren, Hilfslösemittel und/oder Verdicker sowie Pigmente, Farbstoffe und/oder Mattierungsmittel.

Geeignete Lösungsmittel sind abgestimmt auf die verwendeten Bindemittel sowie das Applikationsverfahren Wasser und/oder andere gängige Lösungsmittel aus der Beschichtungstechnik. Beispiele sind Aceton, Ethylacetat, Butylacetat, Methoxyproylacetat, Diacetonalkohol, Glykole, Glykolether, Wasser, Xylol oder Solventnaphtha der Fa. Exxon-Chemie als aromatenhaltiges Lösemittel sowie Gemische der genannten Lösemittel.

Weiterhin können Füllstoffe und nichtfunktionelle Polymere zur Einstellung der mechanischen, haptischen, elektrischen und/oder optischen Eigenschaften enthalten sein. Hierzu eignen sich alle Polymere und Füllstoffe, die mit dem Beschichtungsmittel verträglich und mischbar sind.

Als Polymere Zusatzstoffe kommen Polymere wie beispielsweise Polycarbonate, Polyolefine, Polyether, Polyester, Polyamide und Polyharnstoffe in Frage.

Als Füllstoffe können mineralische Füllstoffe, insbesondere sogenannte Mattierungsmittel, Glasfasern, Ruße, Kohlenstoffnanoröhren (zum Beispiel Baytubes®, Bayer MaterialScience AG, Leverkusen) und/oder metallische Füllstoffe, wie sie für sog. Metalliclackierungen zum Einsatz kommen, verwendet werden.

Die Reaktionsmischung kann weiterhin die vorstehend erwähnten weiteren Komponenten umfassen, neben Photoinitiatoren, Additiven und Co-Solventien also insbesondere (b3), (b4), (b5), (b6) und (b7). Diese Komponenten können in einer erfindungsgemäßen Reaktionsmischung beispielhaft in den folgenden Mengenanteilen vorhanden sein, wobei die Summe der einzelnen Gewichtsanteile ≤ 100 Gewichts-% beträgt:
(a): ≥ 5 Gewichts-% bis ≤ 50 Gewichts-%, vorzugsweise ≥ 20 Gewichts-% bis ≤ 40 Gewichts-%, mehr bevorzugt ≥ 25 Gewichts-% bis ≤ 35 Gewichts-%.
(b1): ≥ 10 Gewichts-% bis ≤ 80 Gewichts-%, vorzugsweise ≥ 30 Gewichts-% bis ≤ 60 Gewichts-%, mehr bevorzugt ≥ 40 Gewichts-% bis ≤ 50 Gewichts-%.
(b2): ≥ 0,1 bis ≤ 8,0 Gewichts-% vorzugsweise ≥ 0,1 bis ≤ 5,0 Gewichts-% besonders bevorzugt ≥ 0,1 bis ≤ 3,0 Gewichts-%
(b3): ≥ 0 Gewichts-% bis ≤ 20 Gewichts-%, vorzugsweise ≥ 2 Gewichts-% bis ≤ 15 Gewichts-%, mehr bevorzugt ≥ 3 Gewichts-% bis ≤ 10 Gewichts-%.
(b4): ≥ 0 Gewichts-% bis ≤ 25 Gewichts-%, vorzugsweise ≥ 0,5 Gewichts-% bis ≤ 15 Gewichts-%, mehr bevorzugt ≥ 1 Gewichts-% bis ≤ 5 Gewichts-%.
(b5): ≥ 0 Gewichts-% bis ≤ 20 Gewichts-%, vorzugsweise ≥ 0,5 Gewichts-% bis ≤ 10 Gewichts-%, mehr bevorzugt ≥ 1 Gewichts-% bis ≤ 5 Gewichts-%.
(b6): ≥ 0 Gewichts-% bis ≤ 50 Gewichts-%, vorzugsweise = 0 Gewichts-%.
(b7): ≥ 0 Gewichts-% bis ≤ 40 Gewichts-%, vorzugsweise ≥ 5 Gewichts-% bis ≤ 30 Gewichts-%, mehr bevorzugt ≥ 10 Gewichts-% bis ≤ 25 Gewichts-%.

Die Reaktionsprodukte aus der Reaktionsmischung werden zur Herstellung einer wässrigen Dispersion in Wasser aufgenommen. Der Anteil des Polyurethan-Polymers im Wasser kann in einem Bereich von ≥ 10 Gewichts-% bis ≤ 75 Gewichts-%, vorzugsweise ≥ 15 Gewichts-% bis ≤ 55 Gewichts-%, mehr bevorzugt ≥ 25 Gewichts-% bis ≤ 40 Gewichts-% liegen.

Der Anteil der Nanopartikel in der wässrigen Dispersion kann in einem Bereich von ≥ 5 Gewichts-% bis ≤ 60 Gewichts-%, vorzugsweise ≥ 10 Gewichts-% bis ≤ 40 Gewichts-%, mehr bevorzugt ≥ 15 Gewichts-% bis ≤ 30 Gewichts-% liegen.

Die Herstellung einer Polyurethandispersion als Beispiel für eine erfindungsgemäße Beschichtung einer Folie kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergierschritt. Im Anschluss erfolgt gegebenenfalls eine weitere Polyaddition oder eine Modifikation in disperser Phase.

Zur Herstellung der Polyurethandispersion können Verfahren wie beispielsweise Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Bevorzugt ist das Schmelz-Emulgier- und das Aceton-Verfahren sowie Mischvarianten dieser beiden Verfahren.

Üblicherweise werden die Bestandteile (b1), (b2), (b3), (b4) und (b6), die keine primären oder sekundären Aminogruppen aufweisen, und ein Polyisocyanat (a) zur Herstellung eines Polyurethan-Präpolymers im Reaktor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von ≥ 50 °C bis ≤ 120 °C, aufgeheizt.

Geeignete Lösungsmittel sind zum Beispiel Aceton, Butanon, Tetrahydrofuran, Dioxan, Acetonitril, Dipropylenglykoldimethylether und 1 -Ethyl- oder 1 -Methyl-2-pyrrolidon, die nicht nur zu Beginn der Herstellung, sondern gegebenenfalls in Teilen auch später zugegeben werden können. Bevorzugt sind Aceton und Butanon. Üblicherweise wird zu Beginn der Reaktion nur Lösemittel für ≥ 60 Gewichts-% bis ≤ 97 Gewichts-%, bevorzugt ≥ 70 Gewichts-% bis ≤ 85 Gewichts-% Festgehalt zugegeben. Je nach Verfahrensvariante, insbesondere wenn vollständige Umsetzung vor dem Dispergieren stattfinden soll, kann mit Fortschreiten der Reaktion die Zugabe weiteren Lösemittels zweckmäßig sein.

Es ist möglich, die Reaktion unter Normaldruck oder erhöhtem Druck, zum Beispiel oberhalb der Normaldruck-Siedetemperatur eines Lösungsmittels wie zum Beispiel Aceton, durchzuführen.

Weiterhin können zur Beschleunigung der Isocyanatadditionsreaktion Katalysatoren wie zum Beispiel Triethylamin, 1,4-Diazabicyclo-[2,2,2]-octan, Zinndioktoat, Wismuthoktoat oder Dibutylzinndilaurat mit vorgelegt oder später zudosiert werden. Bevorzugt ist Dibutylzinndilaurat (DBTL). Neben Katalysatoren kann auch die Zugabe von Stabilisatoren, die die (Meth)acrylatgruppen vor spontaner, ungewollter Polymerisation schützen, zweckmäßig sein. Zumeist enthalten die eingesetzten Verbindungen mit (Meth)acrylatgruppen solche Stabilisatoren bereits.

Anschließend werden die gegebenenfalls zu Beginn der Reaktion noch nicht zugegebenen Bestandteile (a) und/oder (b1), (b2), (b3), (b4) und (b6), die keine primären oder sekundären Aminogruppen aufweisen, zudosiert. Bei der Herstellung des Polyurethan-Präpolymeren beträgt das Stoffmengenverhältnis von Isocyanatgruppen zu mit Isocyanat reaktiven Gruppen ≥ 0,90 bis ≤ 3, bevorzugt ≥ 0,95 bis ≤ 2, besonders bevorzugt ≥ 1,05 bis ≤ 1,5. Die Umsetzung der Komponenten (a) mit (b) erfolgt bezogen auf die Gesamtmenge an mit Isocyanaten reaktiven Gruppen des Teils von (b), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, zum Beispiel Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten können, in Substanz oder in Lösung erhalten.

Nach oder während der Herstellung der Polyurethan-Präpolymere aus (a) und (b) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Ethylmorpholin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen ≥ 50% und ≤ 100%, bevorzugt zwischen ≥ 60% und ≤ 90% der Stoffmenge der anionischen Gruppen. Im Falle kationischer Gruppen werden zum Beispiel Schwefelsäuredimethylester, Milchsäure oder Bernsteinsäure eingesetzt. Werden nur nichtionisch hydrophilierte Verbindungen (b3) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Die gegebenenfalls noch verbliebenen Isocyanatgruppen werden durch Reaktion mit aminischen Komponenten (b5) und/oder falls vorhanden aminischen Komponenten (b3) und/oder Wasser umgesetzt. Diese Kettenverlängerung kann dabei entweder in Lösungsmittel vor dem Dispergieren oder in Wasser nach dem Dispergieren durchgeführt werden. Sind aminische Komponenten in (b3) enthalten, erfolgt die Kettenverlängerung bevorzugt vor der Dispergierung.

Die aminische Komponente (b5) und/oder falls vorhanden die aminische Komponente (b3) kann mit organischen Lösungsmitteln und/oder mit Wasser verdünnt dem Reaktionsgemisch zugegeben werden. Bevorzugt werden ≥ 70 Gewichts-% bis ≤ 95 Gewichts-% Lösungsmittel und/oder Wasser eingesetzt. Sind mehrere aminische Komponenten (b3) und/oder (b5) vorhanden, so kann die Umsetzung nacheinander in beliebiger Reihenfolge oder gleichzeitig durch Zugabe einer Mischung erfolgen.

Während oder im Anschluss an die Herstellung des Polyurethans werden die gegebenenfalls oberflächenmodifizierten Nanopartikel eingebracht. Dies kann durch einfaches Einrühren der Partikel erfolgen. Denkbar ist jedoch auch der Einsatz erhöhter Dispergierenergie, wie beispielsweise durch Ultraschall, Strahldispergierung oder Hochgeschwindigkeitsrüher nach dem Rotor-Stator-Prinzip erfolgen kann. Bevorzugt ist einfaches mechanisches Einrühren.

Die Partikel können prinzipiell sowohl in Pulverform als auch in Form von kolloiden Suspensionen oder Dispersionen in geeigneten Lösungsmitteln eingesetzt werden. Die anorganischen Nanopartikel werden bevorzugt in kolloid disperser Form in organischen Lösungsmitteln (Organosole) oder besonders bevorzugt in Wasser eingesetzt.

Für die Organosole geeignete Lösemittel sind Methanol, Ethanol, i-Propanol, Aceton, 2-Butanon, Methyl-isobutylketon, Butylacetat, Ethylacetat, 1-Methoxy-2-propylacetat, Toluol, Xylol, 1,4-Dioxan, Diacetonalkohol, Ethylenglykol-n-propylether oder beliebige Gemische solcher Lösungsmittel. Geeignete Organosole weisen einen Feststoffgehalt von ≥ 10 Gewichts-% bis ≤ 60 Gewichts-%, bevorzugt ≥ 15 Gewichts-% bis ≤ 50 Gewichts-% auf. Geeignete Organosole sind beispielsweise Siliziumdioxid-Organosole, wie sie zum Beispiel unter den Handelsnamen Organosilicasol® und Suncolloid® (Nissan Chem. Am. Corp.) oder unter der Bezeichnung Highlink®NanO G (Clariant GmbH) erhältlich sind.

Soweit die Nanopartikel in organischen Lösemitteln (Organosole) zum Einsatz kommen, werden diese mit den Polyurethanen, während deren Herstellung vor deren Dispergierung mit Wasser vermischt. Die resultierenden Mischungen werden anschließend durch Zusatz von Wasser oder durch Überführung in Wasser dispergiert. Das organische Lösemittel des Organosols kann nach Bedarf vor oder nach der Dispergierung mit Wasser, vorzugsweise im Anschluss an die Dispergierung, mit Wasser destillativ entfernt werden.

Im Sinne der vorliegenden Erfindung werden weiterhin bevorzugt anorganische Partikel in Form ihrer wässrigen Zubereitungen verwendet. Besonders bevorzugt ist der Einsatz anorganischer Partikel in Form wässriger Zubereitungen oberflächenmodifizierter, anorganischer Nanopartikel. Diese können beispielsweise vor oder gleichzeitig mit der Einarbeitung in das silanmodifizierte, polymere organische Bindemittel oder eine wässrige Dispersion des silanmodifizierten, polymeren organischen Bindemittels durch Silanisierung modifiziert werden.

Bevorzugte wässrige, kommerzielle Nanopartikel-Dispersionen sind unter der Bezeichnung Levasil® (H.C. Starck GmbH, Goslar, Deutschland) und Bindzil® (EKA Chemical AB, Bohus, Sweden) erhältlich. Besonders bevorzugt werden wässrige Dispersionen von Bindzil® CC 15, Bindzil® CC 30 und Bindzil® CC 40 der Fa. EKA (EKA Chemical AB, Bohus, Sweden) eingesetzt.

Soweit die Nanopartikel in wässriger Form zum Einsatz kommen, werden diese den wässrigen Dispersionen der Polyurethane zugesetzt. In einer weiteren Ausführungsform wird bei der Herstellung der Polyurethandispersionen anstelle von Wasser die bevorzugt weiter mit Wasser verdünnten wässrigen Nanopartikel-Dispersion verwendet.

Zwecks Herstellung der Polyurethan-Dispersion werden die Polyurethan-Präpolymere, gegebenenfalls unter starker Scherung, wie zum Beispiel starkem Rühren, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (b5) erfolgen. Die eingesetzte Menge an Polyamin (b5) hängt von den noch vorhandenen, nicht umgesetzten Isocyanatgruppen ab. Bevorzugt werden ≥ 50% bis ≤ 100%, besonders bevorzugt ≥ 75% bis ≤ 95% der Stoffmenge der Isocyanatgruppen mit Polyaminen (b5) umgesetzt.

Die entstehenden Polyurethan-Polyharnstoff-Polymere weisen einen Isocyanatgehalt von ≥ 0 Gewichts-% bis ≤ 2 Gewichts-%, bevorzugt von ≥ 0 Gewichts-% bis ≤ 0,5 Gewichts-%, insbesondere 0 Gewichts-% auf.

Gegebenenfalls kann das organische Lösungsmittel abdestilliert werden. Die Dispersionen können dann einen Festkörpergehalt von ≥ 20 Gewichts-% bis ≤ 70 Gewichts-%, bevorzugt ≥ 30 Gewichts-% bis ≤ 55 Gewichts-%, insbesondere ≥ 35 Gewichts-% bis ≤ 45 Gewichts-% aufweisen.

Das Beschichten einer Folie mit der Polymerdispersion erfolgt vorzugsweise mittels Walzen, Rakeln, Fluten, Spritzen oder Gießen. Ebenfalls möglich sind Druckverfahren, Tauchen, Transferverfahren und Streichen. Die Applikation sollte unter Ausschluss von Strahlung erfolgen, die zu einer vorzeitigen Polymerisation der Acrylat- und/oder Methacrylatdoppelbindungen des Polyurethans führen kann.

Das Trocknen der Polymerdispersion schließt sich an die Applikation des Beschichtungsmittels auf die Folie an. Hierzu wird insbesondere mit erhöhten Temperaturen in Öfen und mit bewegter und gegebenenfalls auch entfeuchteter Luft (Konvektionsöfen, Düsentrockner) sowie Wärmestrahlung (IR, NIR) gearbeitet. Weiterhin können Mikrowellen zum Einsatz kommen. Es ist möglich und vorteilhaft, mehrere dieser Trocknungsverfahren zu kombinieren.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

### Beispiele:

PUR-Dispersion II: Bayhydrol® XP 2648 aliphatische, polycarbonathaltige anionische Polyurethandispersion, lösungsmittelfrei (Fa. Covestro Deutschland AG)
Esacure® One: Photoinitiator (Oligo-[2-Hydroxy-2-methyl-1-((4-(1-methylvinyl)phenyl) propanone (Fa. Lamberti)
Irgacure® 819: Photoinitiator (Phenyl-bis (2,4,6-trimethylbenzoly) phosphinoxid (Fa. BASE SE)
Irgacure® 500: Photoinitiator (Mischung aus 1-Hydroxy-cyclohexylphenyl-keton und Benzophenon (Fa. BASE SE)
BYK 346: Lösung eines polyethermodifizierten Siloxans (Fa. Byk.Chemie)
Borchi® Gel 0625: Nicht-ionischer Verdicker auf Basis von Polyurethan für wässrige Beschichtungsmittel (Fa. OMG Borchers GmbH)
Tego®Glide: Verlaufs- und Slipadditiv
Tego®Wet: Benetzungsmittel
Bindzil® CC401: Nanopartikel (Fa. Hedinger GmbH & Co. KG)

### Herstellung der PUR-Dispersion I:

In einem Reaktionsgefäß mit Rührer, Innenthermometer und Gaseinleitung (Luftstrom 11/h) wurden 471,9 Teile des Polyesteracrylats Laromer® PE 44 F (BASF SE, Ludwigshafen, DE), 8,22 Teile Trimethylolpropan, 27,3 Teile Dimethylolpropionsäure, 199,7 Teile Desmodur® W (cycloaliphatisches Diisocyanat; Covestro Deutschland AG, Leverkusen, DE), und 0,6 Teile Dibutylzinndilaurat in 220 Teilen Aceton gelöst und bis zu einem NCO-Gehalt von 1,47 Gewichts-% bei 60 °C unter Rühren umgesetzt. Der so erhaltenen Präpolymer-Lösung wurden 115,0 Teile des Dipentaerythritol-monohydroxy-pentaacrylats Photomer® 4399 (BASF SE, Ludwigshafen, DE), zugesetzt und untergerührt.

Anschließend wurde auf 40 °C abgekühlt und es wurden 19,53 g Triethylamin zugegeben. Nach 5 min Rühren bei 40 °C wurde die Reaktionsmischung unter schnellem Rühren in 1200 g Wasser von 20 °C gegossen. Anschließend wurden 9,32 g Ethylendiamin in 30,0 g Wasser zugefügt.

Nach 30 min Nachrühren ohne Heizen oder Kühlen wurde das Produkt im Vakuum (50 mbar, max. 50 °C) destilliert, bis ein Festkörper von 40±1 Gewichts-% erreicht wurde. Die Dispersion hatte einen pH-Wert von 8,7 und einen Z-Mittelwert für den Teilchendurchmesser von 130 nm. Die Auslaufzeit in einem 4 mm Becher betrug 18 s. Das gewichtsmittlere Molgewicht Mw des erhaltenen Polymers wurde zu 307840 g/mol bestimmt.

**Tabelle 1: Zusammensetzung der Beschichtungsmittel**

| Einsatzstoff | Beschichtungsmittel A | Beschichtungsmittel B | Beschichtungsmittel C |
|---|---|---|---|
| | Gew.-% | Gew.-% | Gew.-% |
| PUR-Dispersion I | 55,1 | 54,9 | 54,9 |
| PUR-Dispersion II | 9,1 | 9,1 | 9,1 |
| Bindzil® CC401 | 23,9 | 23,8 | 23,8 |
| 4-Hydroxy-4-methyl-pentan-2-on | 4,9 | 4,9 | 4,9 |
| 1-Methyl-2-propanol | 4,9 | 4,9 | 4,9 |
| Photoinitiator | Esacure® One | Irgacure® 819 | Irgacure® 500 |
| | 0,7 | 1,0 | 1,0 |
| Tego®Glide 410 | 0,3 | 0,3 | 0,3 |
| Tego®Wet 280 | 0,3 | 0,3 | 0,3 |
| Byk 346 | 0,3 | 0,3 | 0,3 |
| Borchi® Gel 0625 | 0,3 | 0,3 | 0,3 |
| N,N-Dimethylethylamin | 0,2 | 0,2 | 0,2 |
| Summe | 100,0 | 100,0 | 100,0 |

### Herstellung des wässrigen strahlenhärtbaren Beschichtungsmittels:

Gemäß der Mengenangaben in Tabelle 1 wurden die Beschichtungsmittel A bis C hergestellt, indem Diacetonalkohol und 2-Methoxypropanol vorgelegt wurden, dann unter Rühren die Additive Tego®Glide 410, Tego®Wet 280 und Byk®346 sowie der jeweilige Fotoinitiator hinzugefügt wurden und dann bei 23 °C bis zur vollständigen Lösung aller Komponenten gerührt wurde. Im Anschluss wurde die Lösung filtriert unter Verwendung eines 5 µm Beutelfilters.

Die PUR-Dispersionen I und II wurden vorgelegt und für 5 min bei 500 U/min gerührt. Unter starken Rühren (1000 U/min) wurde innerhalb von 5 min. die zuvor hergestellte Lösung des Fotoinitiators zugegeben.

Danach wurde der pH-Wert unter Zugabe von N,N-Dimethylethylamin unter Rühren (500 U/min) auf pH 8,0 bis 8,5 eingestellt. Unter weiterem Rühren (500 U/min) wurde innerhalb von 10 min Bindzil® CC 401 zugegeben und weitere 20 min nachgerührt. Falls der pH-Wert nach dieser Nachrührzeit < 8 sein sollte, wurde dieser durch weitere Zugabe von N,N-Dimethylethylamin wieder auf pH 8,0 bis 8,5 eingestellt. Borchi® Gel 0625 wurde mit dem Dissolver unter starken Rühren (1000 U/min) eindispergiert und weitere 30 min bei 1000 U/min gerührt. Zum Schluss wurde die Dispersion über einen 10 µm Beutelfilter filtriert.

### Applikation der Polymer-Dispersionen auf Kunststofffolien

Die Beschichtungsmittel A bis C gemäß Tabelle 1 wurden mit einem handelsüblichen Rakel (Sollnassschichtdicke 100 µm) einseitig auf Polycarbonat-Kunststofffolien (Makrofol® DE1-1, Foliendicke 250 µm und 375 µm, Bogengröße DIN A4) aufgetragen. Nach einer Ablüftphase von 10 min bei 20 °C bis 25 °C wurden die lackierten Folien für 10 min bei 110 °C in einem Umluftofen getrocknet beziehungsweise vorvernetzt. Die derart hergestellten Lackfolien waren daraufhin an dieser Stelle in der Prozesskette grifffest.

### UV-Härtung der beschichteten Kunststofffolien

Für die Aushärtung der beschichteten Kunststofffolien wurden UV-LED-Module der IRIS-Serie von der Firma Heraeus-Noblelight verwendet. Speziell wurden Module genutzt, welche UV-Licht der Wellenlänge 365 nm bzw. 395 nm abstrahlen. Zusätzlich wurde ein konventioneller UV-Strahler verwendet, der bei 220 nm also im UVC-Bereich strahlt um die Oberflächenhärtung zu optimieren.

Die Temperatur der zu härtenden Kunststofffolien wurde vor UV-Härtung in einem Umluftofen auf 120°C vorgeheizt. Mittels Temperaturfühler (Testo 830-T2, Infrarot Thermometer) wurde sichergestellt, dass alle Prüfkörper die UV-Härtung mit einer Oberflächentemperatur von 80 - 100 °C durchliefen.

Die für die Härtung applizierte UV-Dosis wurde mit einem Lightbug ILT 490 (International Light Technologies Inc., Peabody MA, USA) ermittelt. Bei 365 nm wurde eine UV-Dosis von 5,2 J/cm² eingestrahlt. Bei 395 nm wurde eine Dosis von 6,7 J/cm² verwendet.

Die Zuschaltung des UVC-Strahlers wirkte sich auf die Dosis nur mit 71 mJ/cm² aus, weil der Lightbug in diesem Wellenlängenbereich fast keine Absorption zeigt.

### Testmethoden zur Beurteilung der UV-Vernetzung der Beschichtungsmittel

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit dem Micro HAZE plus (20°-Glanz und Haze; Byk-Gardner GmbH, Geretsried, Deutschland). Die Messung erfolgt vor und nach Verkratzung. Angegeben werden die Differenzwerte bei Glanz und Haze vor und nach Belastung als ΔGlanz und ΔHaze.

Die **Lösemittelbeständigkeit** der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

Die Lösemittelbeständigkeit wird durch 5 Zahlen charakterisiert, die das Ergebnis der Lösemittel in der obigen Reihenfolge wiedergibt.

**Tabelle 2: Ergebnisse der UV-LED Härtung mit einer Wellenlänge von 365 nm**

| Nr. | Beschichtungsmittel | UVC J/N | Stahlwolle ΔHAZE / Δ20°-Glanz | Lösemittel-Test |
|---|---|---|---|---|
| 1 | A | N | 55 / 32 | 00005 |
| 2 | B | N | 219 / 60 | 00035 |
| 3 | C | N | 305 / 73 | 20045 |
| 4 | A | J | 5 / 3 | 00003 |
| 5 | B | J | 65 / 28 | 00045 |
| 6 | C | J | 160 / 43 | 00035 |

**Tabelle 3: Ergebnisse der UV-LED Härtung mit einer Wellenlänge von bei 395 nm**

| Nr. | Beschichtungsmittel | UVC J/N | Stahlwolle ΔHAZE / Δ20°-Glanz | Lösemittel-Test |
|---|---|---|---|---|
| 7 | A | N | 400 / 159 | 00005 |
| 8 | B | N | 309 / 135 | 00045 |
| 9 | C | N | 301 / 69 | 10045 |
| 10 | A | J | 32 / 10 | 00004 |
| 11 | B | J | 62 / 26 | 00045 |
| 12 | C | J | 165 / 46 | 00035 |

Man sieht, dass Beschichtungsmittel C auf die reine LED-Härtung praktisch nicht anspringt. Verkratzung und Lösemittelbeständigkeit sind bei beiden Wellenlängen mäßig bis schlecht.

Beschichtungsmittel A reagiert deutlich auf die Bestrahlung mit 365 nm. Die Lösemittelbeständigkeit ist bereits relativ gut. Allerdings ist die Oberfläche ohne UVC-Bestrahlung noch kratzempfindlich. Mit UVC-Bestrahlung wird aber hinsichtlich Verkratzung und Lösemittelbeständigkeit ein gutes Niveau erreicht.

Beschichtungsmittel B reagiert auf die Bestrahlung mit den reinen LEDs schlechter als Beschichtungsmittel A. Sowohl die Lösemittelbeständigkeit als auch die Kratzbeständigkeit sind mäßig. Ansprechende Werte bei der Kratzfestigkeit werden erst bei zusätzlicher Nutzung von UVC-Licht erzielt.

## Patentansprüche

1. Verfahren zur Herstellung von Formkörpern mit einer strahlungsgehärteten Beschichtung, umfassend die Schritte:
- Bereitstellen einer beschichteten Folie, wobei die Folie eine strahlungshärtbare Beschichtung umfasst, wobei die Beschichtung ein Polyurethanpolymer umfasst, welches (Meth)acrylatgruppen aufweist und welches erhältlich ist aus der Reaktion einer Reaktionsmischung umfassend:
(a) Polyisocyanate und
(b1) (Meth)acrylatgruppen umfassende und gegenüber Isocyanaten reaktive Verbindungen
(b2) mindestens einem Fotoinitiator
und wobei die Beschichtung weiterhin anorganische Nanopartikel mit einer mittleren Teilchengröße von ≥ 1 nm bis ≤ 200 nm umfasst,
- Formen des Formkörpers
- Härten der strahlungshärtbaren Beschichtung mittels LED-UV-Strahlung.
- optional nach der Härtung mittels LED-UV-Strahlung, Härtung mit UVC-Strahlung.

2. Verfahren gemäß Anspruch 1, wobei das Formen des Formkörpers in einem Werkzeug bei einem Druck von ≥ 20 bar bis ≤ 150 bar erfolgt.

3. Verfahren gemäß Anspruch 1 oder 2, wobei das Formen des Formkörpers bei einer Temperatur von ≥ 20 °C bis ≤ 60 °C unterhalb der Erweichungstemperatur des Materials der Folie stattfindet.

4. Verfahren gemäß Anspruch 1 bis 3, weiterhin umfassend den Schritt:
- Auftragen eines Polymers auf die der ausgehärteten Schicht entgegengesetzten Seite der Folie.

5. Verfahren gemäß Anspruch 1 bis 4, wobei die Folie eine eine Polycarbonatfolie mit einer Dicke von ≥ 10 µm bis ≤ 1500 µm ist.

6. Verfahren gemäß Anspruch 1 bis 5, wobei als Fotoinitiator (b2) ein Fotoinitiator ausgewählt ist aus der Gruppe bestehend aus.Acylphosphinoxide zum Beispiel 2,4,6-Trimethyl-benzoyl-diphenylphosphinoxid, Bisacylphosphinoxide zum Beispiel Bis(2,4,6-trimethylbenzoyl)-phenylphosphinoxid, α-Hydroxyalkylphenone, oligomere α-Hydroxyalkylphenone zum Beispiel Oligo-[2-Hydroxy-2-methyl-1-((4-(1-methylvinyl)phenyl) propanone] und/oder deren Mischungen.

7. Verfahren gemäß Anspruch 1 bis 6, wobei der Fotoinitiator (b2) eine Verbindung ausgewählt aus der Gruppe bestehend aus α-Hydroxyalkylphenone, oligomere α-Hydroxyalkylphenone, wie z.B. Oligo-[2-Hydroxy-2-methyl-1-((4-(1-methylvinyl)phenyl) propanone] und/oder deren Mischungen

8. Verfahren gemäß Anspruch 1 bis 7, wobei die Reaktionsmischung weiterhin die folgenden Komponenten umfasst:
(b3) hydrophilierend wirkende Verbindungen mit ionischen und/oder in ionische Gruppen überführbare Gruppen und/oder nichtionischen Gruppen
(b4) Polyolverbindungen mit einem mittleren Molekulargewicht von ≥ 50 g/mol bis ≤ 500 g/mol und einer Hydroxylfunktionalität von ≥ 2 und
(b5) aminofunktionelle Verbindungen.

9. Verfahren gemäß Anspruch 1 bis 8, wobei die Reaktionsmischung weiterhin die folgende Komponente umfasst:
(b6) Polyolverbindungen mit einem mittleren Molekulargewicht von ≥ 500 g/mol bis ≤ 13000 g/mol und einer mittleren Hydroxylfunktionalität von ≥ 1,5 bis ≤ 5.

10. Verfahren gemäß Anspruch 1 bis 9, wobei die Beschichtung weiterhin die folgende Komponente umfasst:
(b7) (Meth)acrylatgruppen umfassende und gegenüber Isocyanaten nicht reaktive und/oder nicht zur Reaktion gebrachte Verbindungen.

11. Verfahren gemäß Anspruch 1 bis 10, wobei die Oberfläche der Nanopartikel in der Beschichtung durch die kovalente und/oder nicht kovalente Anbindung von weiteren Verbindungen modifiziert ist.

12. Verfahren gemäß Anspruch 1 bis 11,wobei Komponente (b2) in einer 0,1 bis ≤ 8,0 Gewichts-% enthalten ist.

13. Formkörper, herstellbar durch ein Verfahren gemäß Anspruch 1 bis 12.

## Claims

1. Method for producing shaped bodies having a radiation-cured coating, comprising the steps:
- preparation of a coated film, wherein the film comprises a radiation-curable coating, wherein the coating comprises a polyurethane polymer, which has (meth)acrylate groups and which is obtainable from the reaction of a reaction mixture comprising:
(a) polyisocyanates and
(b1) compounds which are reactive to isocyanates and which comprise (meth)acrylate groups
(b2) at least one photoinitiator
and wherein the coating furthermore comprises inorganic nanoparticles with a mean particle size of ≥ 1 nm to ≤ 200 nm,
- shaping of the shaped body
- curing the radiation-curable coating by LED UV radiation.
- optionally after the curing with LED UV radiation, curing with UVC radiation.

2. Method according to Claim 1, wherein the shaping of the shaped body takes place in a tool at a pressure of ≥ 20 bar to ≤ 150 bar.

3. Method according to Claim 1 or 2, wherein the shaping of the shaped body takes place at a temperature of ≥ 20 °C to ≤ 60 °C below the softening temperature of the material of the film.

4. Method according to Claim 1 to 3, furthermore comprising the step:
- applying a polymer to the side of the film opposite the cured layer.

5. Method according to Claim 1 to 4, wherein the film is a polycarbonate film with a thickness of ≥ 10 µm to ≤ 1500 µm.

6. Method according to Claim 1 to 5, wherein, as photoinitiator (b2), a photoinitiator is selected from the group consisting of acylphosphinoxides, such as 2,4,6-trimethyl-benzoyl-diphenylphosphine oxide, bisacyl phosphine oxides such as bis(2,4,6-trimethylbenzoyl)-phenyl phosphine oxide, α-hydroxyalkyl phenones, oligomeric α-hydroxyalkyl phenones such as oligo-[2-hydroxy-2-methyl-1-((4-(1-methylvinyl)phenyl) propanone] and/or mixtures thereof.

7. Method according to Claim 1 to 6, wherein the photoinitiator (b2) is a compound selected from the group consisting of α-hydroxyalkyl phenones, oligomeric α-hydroxyalkyl phenones such as oligo-[2-hydroxy-2-methyl-1-((4-(1-methyl vinyl)phenyl) propanone] and/or mixtures thereof.

8. Method according to Claim 1 to 7, wherein the reaction mixture furthermore comprises the following components:
(b3) hydrophilic-acting compounds with ionic and/or groups convertible into ionic groups and/or nonionic groups
(b4) polyol compounds with a mean molecular weight of ≥ 50 g/mol to ≤ 500 g/mol and of hydroxyl functionality of ≥ 2 and
(b5) amino functional compounds.

9. Method according to Claim 1 to 8, wherein the reaction mixture furthermore comprises the following components:
(b6) polyol compounds with a mean molecular weight of ≥ 500 g/mol to ≤ 13000 g/mol and of a mean hydroxyl functionality of ≥ 1.5 to ≤ 5.

10. Method according to Claim 1 to 9, wherein the coating furthermore comprises the following components:
(b7) compounds not reactive to isocyanates and/or not reacted and comprising (meth)acrylate groups.

11. Method according to Claim 1 to 10, wherein the surface of the nanoparticles in the coating is modified by the covalent and/or non-covalent bonding of further compounds.

12. Method according to Claim 1 to 11, wherein component (b2) is contained in a 0.1 to ≤ 8.0 % w/w.

13. Shaped body, producible by a method according to Claim 1 to 12.

## Revendications

1. Procédé pour la fabrication de corps façonnés pourvu d'un revêtement durci par un rayonnement, comprenant les étapes suivantes :
- mise à disposition d'une feuille revêtue, la feuille comprenant un revêtement durcissable par un rayonnement, le revêtement comprenant un polymère de polyuréthane qui présente des groupes (méth)acrylate et qui peut être obtenu par la réaction d'un mélange réactionnel comprenant
(a) des polyisocyanates et
(b1) des composés comprenant des groupes (méth)acrylate et réactifs par rapport aux isocyanates
(b2) au moins un photo-initiateur,
et le revêtement comprenant en outre des nanoparticules inorganiques présentant une grosseur moyenne de particule de ≥ 1 nm à ≤ 200 nm,
- façonnage du corps façonné
- durcissement du revêtement durcissable par un rayonnement au moyen d'un rayonnement DEL-UV,
- éventuellement, après le durcissement au moyen du rayonnement DEL-UV, durcissement par un rayonnement UVC.

2. Procédé selon la revendication 1, le façonnage du corps façonné étant effectué dans un outil à une pression de ≥ 20 bars à ≤ 150 bars.

3. Procédé selon la revendication 1 ou 2, le façonnage du corps façonné ayant lieu à une température de ≥ 20°C à ≤ 60°C sous la température de ramollissement du matériau de la feuille.

4. Procédé selon la revendication 1 à 3, comprenant en outre l'étape de :
- application d'un polymère sur le côté opposé à la couche durcie de la feuille.

5. Procédé selon la revendication 1 à 4, la feuille étant une feuille de polycarbonate présentant une épaisseur de ≥ 10 µm à ≤ 1500 µm.

6. Procédé selon la revendication 1 à 5, où on choisit, comme photo-initiateur (b2), un photo-initiateur choisi dans le groupe constitué par les phosphinoxydes d'acyle, par exemple le phosphinoxyde de 2,4,6-triméthylbenzoyldiphényle, les phosphinoxydes de bisacyle, par exemple le phosphinoxyde de bis(2,4,6-triméthylbenzoyl)-phényle, les α-hydroxyalkylphénones, les α-hydroxyalkylphénones oligomères, par exemple les oligo-[2-hydroxy-2-méthyl-1-((4-(1-méthylvinyl)phényl)propanones] et/ou leurs mélanges.

7. Procédé selon la revendication 1 à 6, le photo-initiateur (b2) étant un composé choisi dans le groupe constitué par les α-hydroxyalkylphénones, les α-hydroxyalkylphénones oligomères, comme par exemple les oligo-[2-hydroxy-2-méthyl-1-((4-(1-méthylvinyl)phényl)propanones] et/ou leurs mélanges.

8. Procédé selon la revendication 1 à 7, le mélange réactionnel comprenant en outre les composants suivants :
(b3) des composés à effet hydrophile présentant des groupes ioniques et/ou des groupes pouvant être transformés en groupes ioniques et/ou des groupes non ioniques,
(b4) des composés de type polyol présentant un poids moléculaire moyen de ≥ 50 g/mole à ≤ 500 g/mole et une fonctionnalité hydroxyle ≥ 2 et
(b5) des composés à fonctionnalité amino.

9. Procédé selon la revendication 1 à 8, le mélange réactionnel comprenant en outre les composants suivants :
(b6) des composés de type polyol présentant un poids moléculaire moyen de ≥ 500g/mole à ≤ 13.000 g/mole et une fonctionnalité hydroxyle moyenne de≥ 1,5 à ≤ 5.

10. Procédé selon la revendication 1 à 9, le revêtement comprenant en outre les composants suivants :
(b7) des composés comprenant des groupes (méth)acrylate et non réactifs par rapport aux isocyanates et/ou n'ayant pas été amenés à réagir.

11. Procédé selon la revendication 1 à 10, la surface des nanoparticules dans le revêtement étant modifiée par la liaison covalente et/ou non covalente d'autres composés.

12. Procédé selon la revendication 1 à 11, le composant (b2) étant contenu en une quantité de ≥ 0,1% en poids à ≤ 8,0% en poids.

13. Corps façonnés, pouvant être préparés par un procédé selon la revendication 1 à 12.
